Europäisches Patentamt

European Patent Office

Office européen des brevets

(11) Numéro de publication: **0 324 296**
**A1**

## (12) DEMANDE DE BREVET EUROPEEN

(21) Numéro de dépôt: 88403348.1

(22) Date de dépôt: 28.12.88

(51) Int. Cl.⁴: **H04L 7/02**

(30) Priorité: 15.01.88 FR 8800427
28.07.88 FR 8810215

(43) Date de publication de la demande:
19.07.89 Bulletin 89/29

(84) Etats contractants désignés:
AT BE CH DE ES FR GB IT LI NL SE

(71) Demandeur: ALCATEL THOMSON FAISCEAUX
HERTZIENS
55, rue Greffulhe
F-92301 Levallois-Perret Cédex(FR)

(84) DE ES FR GB IT NL SE

Demandeur: ALCATEL N.V.
Strawinskylaan 535
NL-1077 XX Amsterdam(NL)

(84) BE CH LI AT

(72) Inventeur: Lopez, Pierre
14 Rue de Torcy
F-75018 Paris(FR)
Inventeur: Lebret, Yves
53 Boulevard de la Villette
F-75010 Paris(FR)
Inventeur: Gressier, Alain
116 Rue Danton
F-92300 Levallois-Perret(FR)

(74) Mandataire: Pothet, Jean Rémy Emile Ludovic
et al
c/o SOSPI 14-16 rue de la Baume
F-75008 Paris(FR)

(54) Dispositif de détection de perte de synchronisation dans une transmission numérique.

(57) La présente invention se rapporte à un dispositif de détection de perte de synchronisation dans une transmission numérique, disposé respectivement sur au moins l'une des deux voies X ou Y de la sortie d'un démodulateur cohérent qui, selon deux axes en quadrature, fournit respectivement sur chacune de ces deux voies un train de signaux en bande de base, qui comprend :

des moyens (23) de génération d'impulsions correspondant à chaque changement de signe du train de signaux considéré ;

- des moyens (27) de retard de l'horloge (H) récupérée pour permettre un pointage de celle-ci entre lesdites impulsions ;

- et des moyens de détection de tout mauvais synchronisme entre ces impulsions et l'horloge récupérée une fois celle-ci retardée, qui comprennent une bascule (24) dont une entrée est reliée à la sortie des moyens (23) de génération d'impulsions et dont l'autre entrée est reliée au moyen de retard de l'horloge récupérée.

Application notamment au domaine des hyperfréquences.

FIG. 2

# Dispositif de détection de perte de synchronisation dans une transmission numérique.

L'invention se rapporte à un dispositif de détection de perte de synchronisation dans une transmission numérique.

En transmission numérique, l'information est transportée par des symboles délivrés à un rythme régulier appelé "fréquence horloge" (ou "fréquence rythme"). Afin de satisfaire les besoins de la transmission, ces symboles doivent subir, avant émission, un certain nombre de traitements synchrones (embrouillage, codage, modulation, etc...). A la réception, le décodage (et quelquefois la démodulation) nécessite la récupération du rythme du train émis. Dans le cas de modulation numérique de type $2^n$ PSK (modulation à saut de phase de type "Phase shift Keying") ou $2^n$ QAM (modulation à $2^n$ états de type "Quadrature Amplitude Modulation") (avec n entier > 1), le spectre du signal émis ne comporte pas de raie à la fréquence horloge. Certains traitements spécifiques sur les signaux reçus (non linéarités, détection des transitions ou autres) permettent de créer une raie à fréquence horloge qui peut être extraite du bruit qui l'entoure à l'aide d'un filtre à bande étroite. Ce filtrage est en général réalisé à l'aide d'une boucle à verrouillage de phase comportant un "VCO" ("Voltage control oscillator"). Lorsqu'une telle boucle n'est pas accrochée, un signal, correspondant au battement entre la fréquence de la raie (accompagnée du bruit qui l'entoure) et celle du "VCO" est disponible en sortie du comparateur de phase. Les systèmes conventionnels d'alarme détectent :
- la tension de commande du "VCO" lorsque celle-ci est en dehors de la plage normale de fonctionnement,
- et/ou la présence d'un battement en sortie du comparateur de phase.

Un tel dispositif présente un grave inconvénient : En effet la boucle à verrouillage de phase comporte un filtre de bande passante relativement étroite afin d'extraire la raie du bruit qui l'entoure. Lorsque l'écart entre la fréquence du "VCO" et celle de l'horloge est trop important, le battement est supprimé par le filtre et n'est donc plus détecté.

L'invention a pour objet de pallier un tel inconvénient.

L'invention propose, à cet effet, un dispositif de détection de perte de synchronisation dans une transmission numérique, caractérisé en ce qu'il est disposé respectivement sur au moins l'une des deux voies X ou Y de sortie d'un démodulateur cohérent qui, selon deux axes en quadrature, fournit respectivement sur chacune de ces deux voies un train de signaux en bande de base,
en ce que ledit dispositif comprend :

- des moyens de génération d'impulsions correspondant à chaque changement de signe du train de signaux considéré ;
- des moyens de retard de l'horloge récupérée pour permettre un pointage de celle-ci entre lesdites impulsions ;
- et des moyens de détection de tout mauvais synchronisme entre ces impulsions et l'horloge récupérée, une fois celle-ci retardé, qui comprennent une bascule dont une entrée est reliée à la sortie des moyens de génération d'impulsions, et dont l'autre entrée est reliée au moyen de retard de l'horloge récupérée.

Contrairement aux dispositifs de l'art connu, grâce au dispositif de l'invention, une alarme est toujours détectée lorsqu'il y a perte de synchronisme.

Les caractéristiques et avantages de l'invention ressortiront d'ailleurs de la description qui va suivre, à titre d'exemple non limitatif, en référence aux figures annexées sur lesquelles :

- la figure 1 représente un dispositif de l'art connu ;
- la figure 2 représente le dispositif selon l'invention ;
- les figures 3 et 4 illustrent un certain nombre de signaux pris en différents points du dispositif représenté à la figure 2, respectivement dans le cas d'un rythme récupéré et dans le cas d'un rythme non récupéré.
- les figures 5 et 6 illustrent une variante de l'invention.

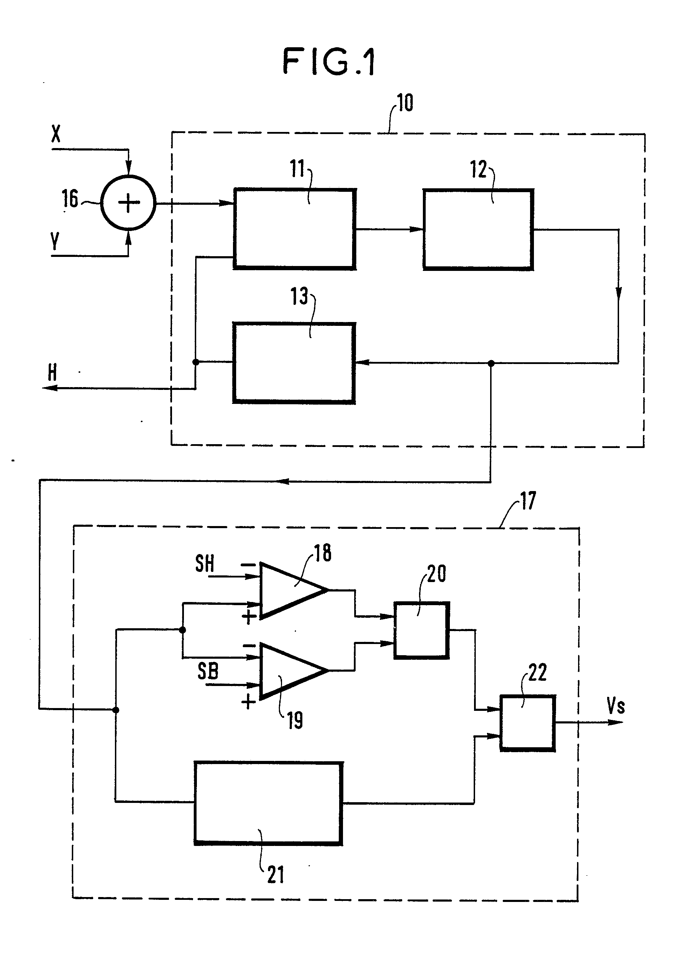

Le dispositif de l'art connu, représenté à la figure 1, comprend, d'une part, une boucle de phase 10 formée :
- d'un comparateur de phase 11 ;
- d'un amplificateur et d'un filtre de boucle 12 ;
- d'un oscillateur 13 contrôlé en tension ;
la sortie de l'oscillateur 13, qui délivre le signal horloge H récupérée, étant reliée à une entrée du comparateur de phase 10. Les deux voies X et Y sont entrées dans un sommateur 16 dont la sortie est reliée à une deuxième entrée du comparateur de phase 11.

Ce dispositif de l'art connu comporte, d'autre part, un circuit d'alarme 17, qui reçoit une tension de commande obtenue à la sortie de l'amplificateur de boucle 12, formé :
- de deux amplificateurs 18 et 19 recevant sur leurs entrées non communes respectivement un seuil haut SH et un seuil bas SB et dont les sorties sont reliées respectivement aux deux entrées d'un premier OU exclusif 20 ;
- un détecteur de battement 21 ;

les sorties du premier OU exclusif 20, et du détecteur 21 étant reliées respectivement aux entrées d'un second OU exclusif 22 dont la sortie délivre un signal alarme Vs.

Mais avec un tel dispositif, lorsque l'écart entre la fréquence du "VCO" et celle de l'horloge est trop important, le battement entre la raie fréquence horloge et celle de l'oscillateur contrôlé en tension n'est plus détecté.

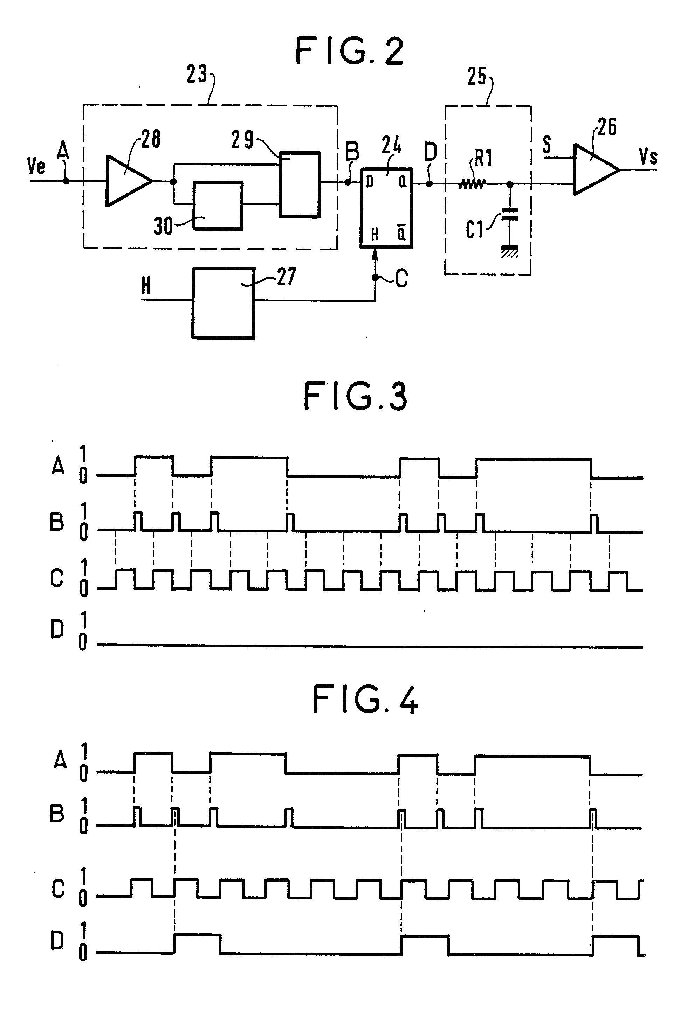

Le dispositif selon l'invention représenté à la figure 2, comprend en série, au moins sur l'une des deux voies X ou Y :
- un circuit 23 de génération d'impulsions ;
- une bascule 24 ;
- un circuit d'intégration 25 ;
- un comparateur 26.

La sortie du circuit 23 est reliée à l'entrée de la bascule 24, par exemple à l'entrée D d'une bascule D, dont la sortie Q, par exemple, est reliée au circuit d'intégration 25, réalisé par exemple à l'aide d'une résistance $R_1$ et d'une capacité $C_1$.

Le dispositif de l'invention comprend de plus un circuit de retard 27 recevant en entrée le signal horloge récupérée et dont la sortie est reliée à l'entrée horloge de la bascule 24.

Le circuit 23 de génération d'impulsions peut être réalisé à l'aide d'un amplificateur 28 dont la sortie est reliée d'une part à une première entrée d'un OU exclusif 29 et d'autre part à un circuit de retard 30 dont la sortie est reliée à la deuxième entrée du OU exclusif 29.

Sur les figure 3 et 4 sont représentés les signaux obtenus en différents points A, B, C et D du dispositif représenté à la figure 2 ; les signaux C et D de la figure 3 correspondant aux signaux obtenus aux points C et D dans le cas d'un rythme récupéré, et les signaux C et D de la figure 4 correspondant aux signaux obtenus aux points C et D dans le cas d'un rythme non récupéré.

Au point B on obtient des impulsions correspondant aux fronts montant ou descendant du signal d'entrée Ve (point A).

Dans le cas d'un rythme correctement récupéré le signal horloge décalé (point C) est pointé entre ces impulsions. En sortie de la bascule 24 (point D), le signal est nul, et le signal alarme de sortie Vs est donc lui aussi nul.

Par contre dans le cas d'un rythme non récupéré le front avant de l'horloge décalée (point C) ne tombe pas toujours entre deux impulsions (point B), on obtient donc des impulsions en sortie Q de la bascule (point D), dont la valeur moyenne est comparée à un seuil S pour générer un signal alarme Vs lorsque cette valeur moyenne dépasse ce seuil.

On dispose donc après pointage, lorsqu'il y a récupération de rythme, d'un signal continu correspondant à un état logique constant égal à 0 ou 1 suivant la sortie Q ou $\overline{Q}$ que l'on utilise.

Par contre lorsqu'il n'y a pas récupération de rythme, il n'y a plus synchronisme entre les impulsions créées et l'horloge du "VCO", on obtient donc après pointage un signal aléatoire dont la valeur moyenne est différent de celle obtenue lorsqu'il y a récupération de rythme.

Ainsi le dispositif selon l'invention permet une détection aisée du battement, quelle que soit sa valeur. Celui-ci est fondé sur une corrélation entre le signal et l'horloge récupérée. En effet la démodulation cohérente selon deux axes en quadrature fournit deux trains de signaux en bande de base appelés X et Y qui sont traités afin de créer des impulsions à chaque changement de signe sur les voies X et Y, comme représenté sur l'une de ces voies en figure 2. Lorsque le rythme est récupéré il y a synchronisme entre les impulsions et 1 horloge, un déphasage adéquat permettant alors d'effectuer un pointage par l'horloge entre ces impulsions.

Dans un exemple de réalisation le circuit de retard 27 décale le signal H d'environ la moitié d'un temps bit (période de l'horloge) et les impulsions délivrées par le circuit 23 sont de durée inférieure à la moitié d'un temps bit. Avec une horloge H de 17 MHz par exemple, on a la moitié d'un temps bit égale à 30 nanosecondes.

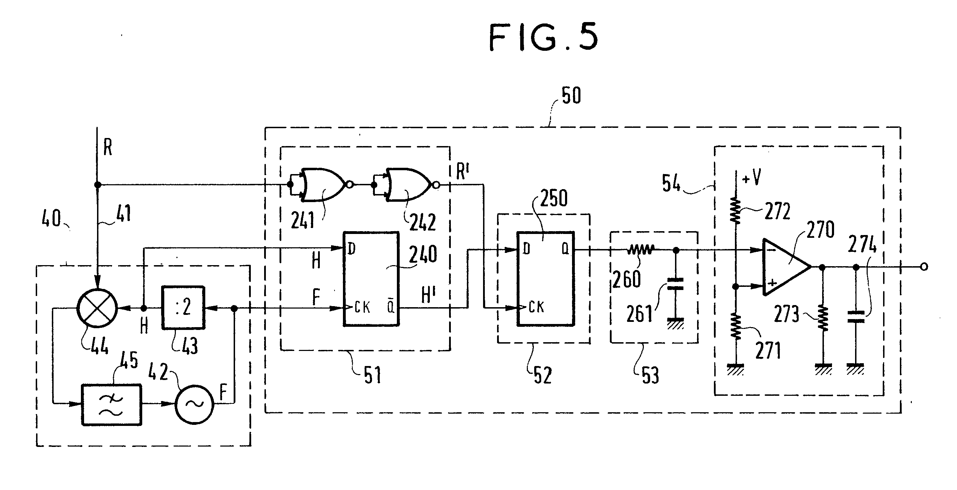

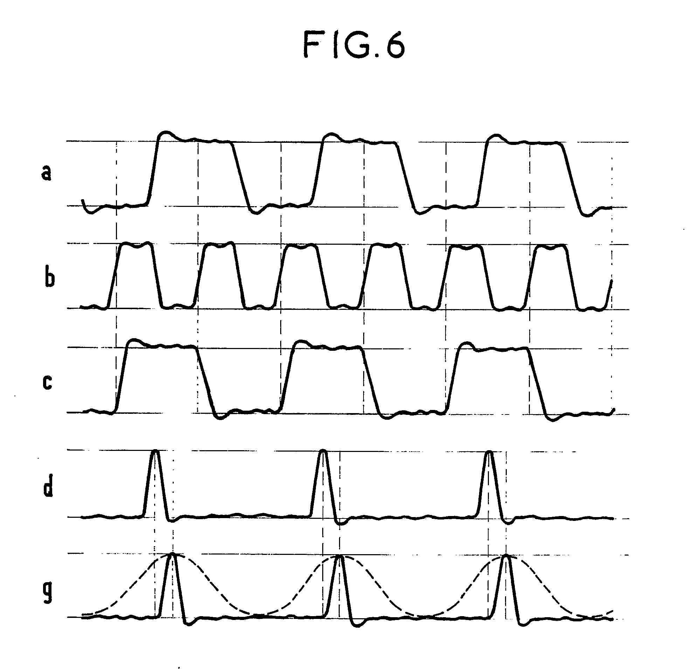

Les figures 5 et 6 illustrent une variante de l'invention.

On distingue sur la figure 5 une boucle à verrouillage de phase avec une entrée de signal de référence 41 et un circuit d'alarme de déverrouillage 50.

La boucle de verrouillage de phase 40 reçoit sur son entrée de signal de référence 41 un signal R formé d'une suite d'impulsions périodiques sur la fréquence desquelles elle doit se verrouiller. Elle comporte un oscillateur commandé en tension 42 engendrant un signal rectangulaire d'horloge F au double de la fréquence des impulsions du signal R appliqué à l'entrée de référence 41, un diviseur de fréquence par deux 43 qui est connecté à la suite de l'oscillateur commandé en tension 42 et qui délivre un signal d'horloge H à la fréquence des impulsions du signal R appliqué sur l'entrée de référence 41, un comparateur de phase 44 qui reçoit sur une entrée les impulsions du signal R appliqué sur l'entrée du signal de référence 41 et sur une autre entrée un signal de mesure constitué par le signal rectangulaire d'horloge H délivré par le diviseur de fréquence par deux 43, et qui délivre en sortie un signal d'erreur de phase, et un filtre passe bas 45 qui est intercalé entre la sortie du comparateur de phase 44 et une entrée de réglage de la fréquence de l'oscillateur commandé en tension 42 et qui transforme le signal d'erreur de phase délivré par le comparateur de phase 44 en une tension de réglage de fréquence de l'oscillateur commandé en tension 42.

Cette boucle à verrouillage de phase est de conception classique et son fonctionnement ne sera pas détaillé. Lorsqu'elle est verrouillée le signal rectangulaire d'horloge H délivré par le diviseur de fréquence par deux 43 et appliqué sur une entrée du comparateur de phase 44 est synchrone avec la suite périodique d'impulsions du signal R appliqué sur l'entrée du signal de référence 41 et présente des fronts montants alignés sur le centre des impulsions de ce signal R. Lorsqu'elle est déverrouillée, ce synchronisme est perdu et les impulsions du signal R apparaissent à n'importe quel moment au cours des périodes du signal rectangulaire d'horloge H.

Le circuit d'alarme de déverrouillage 50 comporte un circuit de retard fixe 51 suivi d'un circuit d'échantillonnage 52, d'un circuit intégrateur 53 et d'un circuit comparateur à seuil 54.

Le circuit de retard fixe 51 comporte un registre de type D 240 et deux portes logiques de type "non ou" 241, 242. Le registre de type D 240 reçoit le signal rectangulaire d'horloge H sur son entrée de données D connectée en sortie du diviseur de fréquence par deux 43 de la boucle à verrouillage de phase 40 et le signal rectangulaire d'horloge F sur son entrée d'horloge CK connectée à la sortie de l'oscillateur commandée en tension 42 de la boucle à verrouillage de phase 40. Il bascule sur les transitions montantes de son signal d'horloge et délivre sur sa sortie complémentée $\overline{Q}$ un signal rectangulaire d'horloge H' de forme analogue au signal rectangulaire d'horloge H mais présentant par rapport à ce dernier un retard de trois quarts de période augmenté d'un délai du au temps de basculement. Lorsque la boucle à verrouillage de phase 40 est verrouillée, ce retard de trois quarts de période permet, si l'on néglige le délai du au temps de basculement, de centrer les premières demi-périodes du signal rectangulaire d'horloge H' sur les impulsions du signal R appliqué à l'entrée du signal de référence 41 de la boucle à verrouillage de phase 40.

Les portes logiques de type "non ou" 241, 242 sont montées chacune en amplificateur inverseur. Placées en cascade sur l'entrée de signal de référence 41 de la boucle à verrouillage de phase 40, elles engendrent un signal impulsionnel R' de forme analogue au signal impulsionnel R mais dont les impulsions, retardées d'un délai correspondant au temps de basculement du registre de type D 240, sont centrées exactement sur les milieux des premières demi-périodes du signal rectangulaire d'horloge H' lorsque la boucle à verrouillage de phase est effectivement verrouillée.

Le circuit d'échantillonnage 52 est un registre de type D 250 qui reçoit le signal rectangulaire H' sur son entrée de données D connectée à la sortie complémentée $\overline{Q}$ du registre de type D 240 du circuit de retard fixe 51, et les impulsions du signal R' sur son entrée d'horloge CK connectée en sortie de la porte logique de type "non ou" 242 du circuit de retard fixe 51.

Lorsque la boucle à verrouillage de phase 40 est verrouillée, le registre de type D 250 maintient sa sortie non complémentée Q au niveau logique un car il échantillonne le signal rectangulaire d'horloge H' au milieu des premières demi-périodes alors que ce signal est au niveau logique un. En effet, pendant le verrouillage de la boucle à verrouillage de phase 40, le signal impulsionnel R et le signal rectangulaire d'horloge H sont synchrones et la version retardée R' du signal impulsionnel R a ses impulsions centrées sur les premières demi-périodes de la version retardée H' du signal rectangulaire d'horloge H.

Lorsque la boucle à verrouillage de phase 40 est déverrouillée le registre de type D 250 a sa sortie non complémentée Q qui passe aux niveaux logique zéro et un de manière équiprobable car il échantillonne le signal rectangulaire d'horloge H' en des points aléatoires, le signal impulsionnel R et le signal d'horloge H ainsi que leurs versions retardées R' et H' n'étant plus synchronisés.

Le circuit intégrateur 53 a une constante de temps grande par rapport à la période du signal d'horloge rectangulaire H ou H'. Il est constitué d'un filtre passe bas à résistance série 260 et à condensateur parallèle 261. Lorsque la boucle à verrouillage de phase 40 est verrouillée le condensateur 261 se charge à une valeur de tension V1 correspondant au niveau logique un en sortie non complémentée Q du registre de type D 250. Lorsque la boucle à verrouillage de phase 40 est déverrouillée, le condensateur 261 se charge à une valeur moyenne de tension Vm à mi-chemin entre la valeur de tension V1 et une valeur de tension Vo qui correspond au niveau logique zéro en sortie non complémentée Q du registre de type D 250 qui est plus basse que la valeur de tension V1 du fait que l'on est en logique positive.

Le circuit comparateur à seuil engendre un signal d'alarme de déverrouillage par comparaison de la valeur de tension développée aux bornes du condensateur 261 à un seuil de tension Vs choisi entre la valeur de tension V1 et la valeur moyenne de tension Vm. Il comporte un amplificateur différentiel 270 connecté par son entrée inverseuse à la sortie du circuit intégrateur 52, par son entrée non inverseuse à la masse au moyen d'une résistance 271 et à une tension de polarisation +V au moyen d'une résistance 272, et par sa sortie à la masse au moyen du montage parallèle d'une résistance 273 et d'un condensateur 274. Les valeurs des résistances 271, 272 qui forment un pont résistif de polarisation sont choisies de manière à polariser l'entrée non inverseuse de l'amplificateur différentiel 270 au seuil de tension Vs choisi entre la valeur de tension V1 et la valeur moyenne de tension Vm.

Lorsque la boucle de verrouillage de phase 40 est verrouillée, l'amplificateur différentiel 270 prend une tension de sortie nulle car il reçoit sur son entrée inverseuse une valeur de tension égale à V1, ou proche de V1 si le signal impulsionnel R est affecté d'une gigue de bruit, qui est supérieure à la valeur de seuil de tension VS appliquée sur son entrée non inverseuse. Lorsque la boucle de verrouillage de phase 40 est déverrouillée, l'amplificateur différentiel 270 prend une tension de sortie positive +V car il reçoit sur son entrée inverseuse la valeur moyenne de tension Vm qui est inférieure à la valeur de seuil de tension Vs.

La figure 6 représente des diagrammes illustrant la forme en fonction du temps de divers signaux parcourant le circuit d'alarme de déverrouillage. On distingue en a le signal rectangulaire d'horloge H délivré par le diviseur de fréquence 43 de la boucle à verrouillage de phase 40, en b le signal rectangulaire d'horloge F à fréquence double disponible en sortie de l'oscillateur commandé en tension 42 de la boucle à verrouillage de phase, en c la version retardée H' par le circuit de retard fixe 51 du signal rectangulaire d'horloge H illustré en a, en d le signal impulsionnel R appliqué à l'entrée de signal de référence 41 de la boucle à verrouillage de phase 40 et en g la version retardée R' par le circuit de retard fixe 51 du signal impulsionnel R illustré en d. Les pointillés indiquent la répartition de position des impulsions en présence de bruit.

On peut, sans sortir du cadre de l'invention modifier certaines dispositions ou remplacer certains moyens par des moyens équivalents.

## Revendications

1/ Dispositif de détection de perte de synchronisation dans une transmission numérique, caractérisé en ce qu'il est disposé respectivement sur au moins l'une des deux voies X ou Y de sortie d'un démodulateur cohérent qui, selon deux axes en quadrature, fournit respectivement sur chacune de ces deux voies un train de signaux en bande de base, en ce que ledit dispositif comprend :
- des moyens (23) de génération d'impulsions correspondant à chaque changement de signe du train de signaux considéré ;
- des moyens (27) de retard de l'horloge (H) récupérée pour permettre un pointage de celle-ci entre lesdites impulsions ;
- et des moyens de détection de tout mauvais synchronisme entre ces impulsions et l'horloge récupérée une fois celle-ci retardée, qui comprennent une bascule (24) dont une entrée est reliée à la sortie des moyens (23) de génération d'impulsions, et dont l'autre entrée est reliée au moyen de retard de l'horloge récupérée.

2/ Dispositif selon la revendication 1, caractérisé en ce que cette bascule (24) est suivie d'un circuit intégrateur (25) et d'un circuit de comparaison (26) à un seuil (S).

3/ Dispositif selon l'une quelconque des revendications 1 ou 2, caractérisé en ce que la bascule (24) est une bascule D.

4/ Dispositif selon l'une quelconque des revendications précédentes, caractérisé en ce que les moyens (27) de retard de l'horloge décale celle-ci de la moitié d'un temps bit.

5/ Dispositif selon l'une quelconque des revendications précédentes, caractérisé en ce que les moyens (23) de génération d'impulsions délivrent des impulsions de durée inférieure à la moitié d'un temps bit.

6/ Dispositif selon la revendication 1, caractérisé en ce qu'il comporte :
- un oscillateur commandé en tension (42), un comparateur de phase (44) recevant en entrées un signal de référence (R) constitué d'impulsions se répétant à une fréquence sur laquelle doit se synchroniser la boucle et un signal de mesure constitué d'un signal rectangulaire d'horloge (H) provenant de l'oscillateur commandé en tension (42), et un filtre passe-bas (45) intercalé entre la sortie du comparateur de phase (44) et une entrée de réglage de l'oscillateur commandé en tension (42),
- des moyens de retard fixe (51) opérant sur le signal de référence (R) et sur le signal de mesure (H), et engendrant des versions (R', H') de ces signaux dans lesquelles, lorsque la boucle est verrouillée, les impulsions du signal de référence sont centrées au milieu d'une demi-période du signal rectangulaire de mesure,
- des moyens d'échantillonnage (52) échantillonnant la version (H') du signal rectangulaire de mesure engendrée par les moyens de retard fixe (51) aux instants d'apparition des impulsions de la version (R') du signal de référence engendrée par les moyens de retard fixe (51),
- des moyens d'intégration (53) effectuant l'intégration des échantillons délivrés par les moyens d'échantillonnage (52) sur un intervalle de temps grand par rapport à la période du signal de mesure (H) et
- des moyens de comparaison à seuil (54) comparant le niveau fourni par les moyens d'intégration (53) à un seuil de décision (Vs) et délivrant en réponse un signal d'alarme de déverrouillage.

7/ Dispositif selon la revendication 6, caractérisé en ce que pour une boucle à verrouillage de phase (40) comportant un diviseur de fréquence par deux (43) qui est intercalé entre l'oscillateur commandé en tension (42) et le comparateur de phase (44) et qui délivre le signal de mesure (H) à partir d'un signal rectangulaire d'horloge (F) de fréquence double engendré par l'oscillateur commandé en tension (42), les moyens de retard fixe (51) comportant un registre de type D (240) qui reçoit le signal de mesure (H) sur son entrée de données et le signal rectangulaire d'horloge (F) à fréquence double sur son entrée d'horloge et qui délivre la version retardée (H′) du signal de mesure (H).

8/ Dispositif selon la revendication 6, caractérisé en ce que les moyens d'échantillonnage (52) comporte un registre à décalage de type D (250) qui reçoit la version (H′) du signal rectangulaire de mesure engendré par les moyens de retard fixe (51) sur son entrée de données et la version (R′) du signal de référence (R) engendrée par les moyens de retard fixe (51) sur son entrée d'horloge.

# FIG.1

# FIG.2

# FIG.3

# FIG.4

FIG. 5

EP 0 324 296 A1

# FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 230 900 (ALCATEL THOMSON FAISCEAUX HERTZIENS) <br> * Colonne 3, lignes 18-35 * <br> --- | 1 | H 04 L 7/02 |
| Y | RESEARCH DISCLOSURE, no. 261, janvier 1986, pages 38-40, résumé no. 26138, Emsworth, Hampshire, GB; "Loss of synchronism detector for serial data detector" <br> * Colonne de gauche, en entier * | 1 | |
| A | IDEM <br> --- | 5-7 | |
| Y | US-A-4 663 769 (KRINOCK) <br> * Colonne 4, ligne 53 - colonne 6, ligne 26 * | 1,6,8 | |
| A | --- | 2-4 | |
| A | DE-A-2 716 044 (LICENTIA PATENT VERWALTUNGS GmbH) <br> * Page 4, ligne 29 - page 5, ligne 1 * <br> --- | 1-3,6,8 | |
| Y | PROCEEDINGS OF THE IEEE 1986 - CUSTOM INTEGRATED CIRCUITS CONFERENCE, Rochester, New York, 12-15 mai 1986, pages 242-248, IEEE, New York, US; R. SPARKES: "QuickChip 4tm: A methodology for the prototyping of mixed analog-digital designs" <br> * Page 245, colonne de gauche, lignes 32-42 * | 1,6,8 | |
| A | IDEM <br> ---      -/- | 7 | |

**DOMAINES TECHNIQUES RECHERCHES (Int. Cl.4)**

H 04 L
H 03 L

Le présent rapport a été établi pour toutes les revendications

| Lieu de la recherche | Date d'achèvement de la recherche | Examinateur |
|---|---|---|
| LA HAYE | 23-03-1989 | VERSLYPE J.P. |

EPO FORM 1503 03.82 (P0402)

Office européen
des brevets

**RAPPORT DE RECHERCHE EUROPEENNE**

Numero de la demande

EP 88 40 3348

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 151 463 (KIBLER) <br> * Colonne 1, lignes 59-64; colonne 4, lignes 59-66 * <br> ----- | 1,6 | |
| | | | **DOMAINES TECHNIQUES RECHERCHES (Int. Cl.4)** |

Le présent rapport a été établi pour toutes les revendications

| Lieu de la recherche | Date d'achèvement de la recherche | Examinateur |
|---|---|---|
| LA HAYE | 23-03-1989 | VERSLYPE J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                             
& : membre de la même famille, document correspondant

EPO FORM 1503 03.82 (P0402)